# FASCICULE DE BREVET EUROPEEN

(11) **EP 0 811 900 B1**
(45) Date de publication et mention de la délivrance du brevet: **09.05.2001**
(21) Numéro de dépôt: 97401216.3
(22) Date de dépôt: 02.06.1997
(51) Int. Cl.: G05D 16/06, G05D 16/10

(54) **Ensemble de commande et de distribution de gaz pour réservoir de gaz sous pression**
Gas-regel- und -verteilungsanordnung für Druckgasbehälter
Gas control and dispensing assembly for gas cylinder

(30) Priorité: 05.06.1996 FR 9606925
(43) Date de publication de la demande: 10.12.1997
(73) Titulaire: TAEMA, F-92160 Antony (FR)
(72) Inventeur: Collado, Pedro, 77330 - Ozoir la Ferriere (FR); Victor, Olivier, 91600 - Savigny sur Orge (FR); Lhomer, Gérard, 78320 Le Mesnil Saint Denis (FR); Bleys, Christian, 77000 Livry sur Seine (FR)
(74) Mandataire: Le Moenner, Gabriel

(56) Documents cités:
- EP-A- 0 417 882
- EP-A- 0 629 937

## Description

La présente invention a pour objet un ensemble de commande et de distribution de gaz, adapté pour être raccordé à un réservoir contenant du gaz sous pression, par exemple un gaz à usage médical tel que l'oxygène, du type comportant un corps dans lequel est ménagé un passage d'entrée du gaz du réservoir, contenant un clapet d'isolation exposé au gaz sous haute pression, un détendeur de pression, des moyens de sélection et de régulation du débit par au moins une sortie de gaz à pression réduite, cet ensemble comprenant également un organe tubulaire de commande du clapet d'isolation coiffant le corps.

Un ensemble de commande de ce type est décrit dans le document EP-A-0 629 937. Dans cet ensemble de commande antérieur, l'organe tubulaire contient un sous-ensemble déplaçable longitudinalement par la rotation de l'organe de commande tubulaire au moyen de découpes appropriées formant cames, et ce déplacement commande à son tour le déplacement axial du clapet d'isolation. Cette structure est relativement complexe et par conséquent onéreuse.

De plus la soupape d'évacuation de gaz comprimé résiduel, disposée latéralement à cette structure, ne peut présenter qu'un petit diamètre. Corrélativement elle doit être actionnée par une importante variation de pression (2 à 3x10⁵ Pa), ce qui entraîne l'obligation de procéder à un réglage laborieux de cette soupape. Son coût de fabrication est en outre relativement élevé, en raison du nombre de pièces et des opérations d'usinage nécessaires. Dans cet ensemble de commande antérieur également, les trous de passage du disque du sélecteur de débit sont décalés longitudinalement de la sortie de gaz basse pression et doivent être réalisés par un moyen chimique en raison de leur très petit diamètre (de l'ordre de 0,1mm pour le premier trou), ces moyens de forage chimique étant très onéreux. Enfin, cette technologie exige une tolérance de perçage extrêmement serrée pour ces trous (de l'ordre du micron).

L'invention a pour but de proposer un ensemble de commande et de distribution de gaz du type précité, de construction simplifiée et de coûts réduits.

Conformément à l'invention, le clapet d'isolation est constitué par un tiroir déplaçable transversalement dans un logement du corps et dont les extrémités opposées coopèrent directement avec des rampes courbes de guidage formées par l'organe tubulaire de commande et profilées de manière qu'une rotation de l'organe tubulaire entraîne un déplacement en translation du tiroir transversalement à l'axe, dans un sens ou dans le sens opposé suivant le sens de rotation de l'organe tubulaire.

Un tel système à tiroir coulissant transversalement et coopérant directement avec l'organe tubulaire de commande est notablement plus simple et d'un coût de fabrication inférieur au sous-ensemble coulissant axialement pour commander le clapet d'isolation, dans l'ensemble du document précité.

Selon une caractéristique de l'invention, l'ensemble comprend des moyens pour interdire la sélection d'un débit de gaz basse pression tant que le clapet d'isolation est fermé, et inversement pour interdire la fermeture du clapet d'isolation tant que les moyens de sélection du débit sont ouverts.

On assure ainsi une sécurité d'utilisation du gaz du réservoir qui n'était pas obtenue avec l'ensemble décrit dans le brevet antérieur précité.

Selon une autre caractéristique avantageuse de l'invention, l'ensemble comporte une soupape d'évacuation montée dans le corps coaxialement au détendeur, la soupape et le détendeur étant logés dans un évidement du corps communiquant avec l'extérieur par des ouvertures formées dans le corps et dans l'organe tubulaire de commande du clapet d'isolation.

Cet agencement permet de supprimer le ressort de la soupape latérale de l'ensemble du brevet européen antérieur, grâce au fait que le ressort du détendeur remplit simultanément les deux fonctions de détente et de commande de la soupape d'évacuation. Ce ressort unique ne nécessite qu'un seul réglage, et par ailleurs la fabrication de cette partie de l'ensemble de commande en est simplifiée, et donc son coût diminué.

Selon une autre caractéristique de l'invention, l'ensemble inclut en outre un clapet de remplissage comportant une cage mobile axialement dans un alésage étagé et définissant intérieurement une chambre de même diamètre intérieur qu'une portion de diamètre réduit de l'alésage étagé et recevant une partie de l'élément de clapet portant le joint pour recevoir, et abriter, ce dernier lors d'un déplacement de l'élément de clapet à partir de sa position de fermeture.

Avec un tel agencement, le joint annulaire se trouve placé à l'abri de la pièce tubulaire avant l'ouverture effective de l'élément de clapet et est ainsi protégé mécaniquement et thermiquement par la cage contre les effets indésirables de l'introduction de particules étrangères et la température élevée résultant de la compression rapide adiabatique du gaz de remplissage lors de l'ouverture des circuits entre la source de gaz sous pression et le volume intérieur du réservoir.

D'autres particularités et avantages de l'invention apparaîtront au cours de la description qui va suivre, faite en référence aux dessins annexés qui en illustrent une forme de réalisation à titre d'exemple non limitatif.
La figure 1 est une vue en coupe longitudinale d'un ensemble de commande et de distribution de gaz selon l'invention ;
La figure 2 est une vue en coupe transversale suivant 2/2 de la figure 1 ;
La figure 3 est une vue en coupe transversale schématique suivant 3/3 de la figure 1 ;
La figure 4 est une vue mi-coupe longitudinale/mi-élévation à échelle agrandie, d'un clapet de seconde détente de l'ensemble de commande de la figure 1 ;
La figure 5 est une vue en coupe longitudinale partielle à échelle agrandie d'une extrémité de l'ensemble de commande de la figure 1, montrant en position active un système d'indexation angulaire du dispositif de sélection de débit de gaz basse pression ;
La figure 6 est une vue en coupe analogue à la figure 1 d'un ensemble incorporant une variante préférée de clapet de remplissage ; et,
Les figures 7 et 8 sont des vues en coupe partielle montrant la séquence d'ouverture du clapet de remplissage de la figure 6.

L'ensemble de commande et distribution de gaz représenté aux dessins est adapté pour être raccordé à un réservoir (non représenté), ou plus particulièrement une bouteille contenant du gaz sous haute pression, notamment un gaz à usage médical, typiquement de l'oxygène.

Cet ensemble de commande comprend un corps allongé 1 dont une extrémité inférieure 2 est filetée pour pouvoir être vissée dans une ouverture taraudée correspondante de l'entrée du réservoir, et dans laquelle est ménagé un alésage longitudinal 3 d'entrée du gaz du réservoir. Dans le corps 1, sont disposés un clapet d'isolation 4 exposé au gaz sous haute pression parvenant par l'alésage 3, un détendeur de pression 5 disposé en aval du tiroir 4, et un raccord latéral 6 de sortie de gaz à moyenne pression.

L'ensemble comprend également un second étage de détente 7 placé en aval du détendeur 5 et situé en regard d'un raccord 8 de sortie de gaz à pression réduite (c'est-à-dire à une pression supérieure à la pression atmosphérique), un dispositif 9 de sélection et de régulation du débit de gaz basse pression par le raccord 8, et un organe tubulaire 11 coiffant une partie supérieure tubulaire du corps 1 et de même axe longitudinal X-X que cette dernière, et contenant le clapet d'isolation 4, le détendeur 5, le second étage de détente 7 et le sélecteur de débit 9.

Les moyens de remplissage du réservoir 1 comprennent un clapet 12 monté dans un alésage étagé transversal du corps 1 entre l'extrémité filetée 2 et le tiroir 4, ce clapet étant sollicité en position de fermeture par un ressort 13 prenant appui sur un filtre poreux 14 pontant l'alésage 3.

Le clapet 12 débouche dans un embout latéral d'entrée 15 dans lequel est ménagé un taraudage 16 pour le vissage d'un raccord de connexion à un récipient de remplissage, cet embout présentant une collerette d'entrée 17 dont le diamètre est inférieur à celui du taraudage 16 et interdisant le vissage de tout raccord qui aurait les mêmes diamètres et pas que le taraudage 16, garantissant le remplissage du réservoir et l'adéquation de son contenu lors de son utilisation. En effet le remplissage ne peut s'effectuer que par un dispositif adapté, tel que celui décrit dans le document FR-A-2 726 346.

L'organe tubulaire 11 de commande coiffe la partie supérieure du corps 1 et comporte à son extrémité inférieure en vis-à-vis du clapet d'isolation constitué par le tiroir 4, deux rampes ou surfaces opposées formant cames 18, 19, ménagées sur sa paroi intérieure. Les rampes 18, 19 sont en contact avec les extrémités opposées arrondies 4a, 4b faisant saillie hors du corps 1 du tiroir 4, lequel est disposé orthogonalement à l'axe longitudinal XX du corps 1 et de l'organe tubulaire 11.

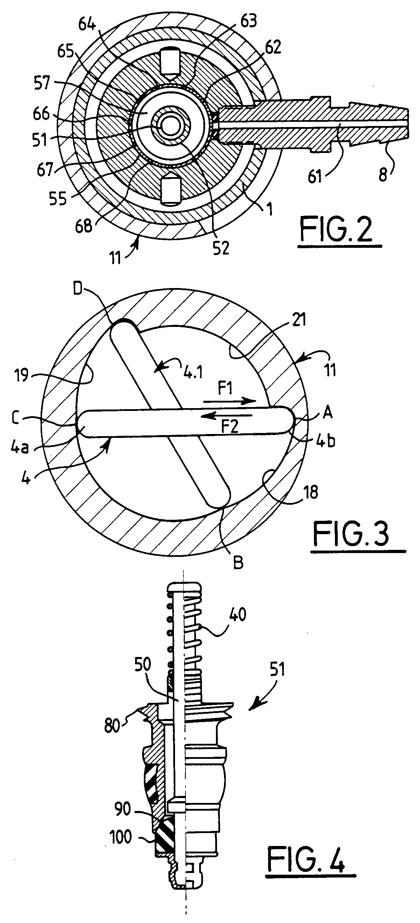

Les rampes 18, 19 (figure 3) se raccordent l'une à l'autre et s'étendent angulairement sur la plus grande partie de la circonférence intérieure de l'extrémité de l'organe tubulaire 11, leurs extrémités opposées A,D, étant séparées par une partie en saillie angulaire intérieure 21. Les extrémités opposées 4a, 4b du tiroir 4 sont arrondies de façon à faciliter leur glissement sur les rampes 18, 19, qui sont profilées de manière qu'une rotation de l'organe tubulaire 11 entraîne un déplacement en translation du tiroir 4 transversalement dans un sens ou dans le sens opposé suivant le sens de rotation de l'organe tubulaire 11, en ouvrant ou en fermant corrélativement le clapet d'isolation 4.

Plus particulièrement, on voit à la figure 3 que les rampes 18, 19 sont diamétralement opposées et que tandis que le rayon de courbure de la rampe 18 décroît de son extrémité A à son extrémité B, le rayon de courbure de la rampe 19 croît de son extrémité C, diamétralement opposée à l'extrémité A, jusqu'à son extrémité D, diamétralement opposée à l'extrémité B de la rampe 18. Les extrémités adjacentes B et C des rampes sont raccordées par un secteur circulaire de rayon sensiblement constant. On comprend que dans ces conditions, la rotation de l'organe 11 provoque une translation transversale du tiroir 4 dans son logement 26 du corps 1 dans l'un des deux sens indiqués par les flèches F1, F2. Pour la commodité de la description on a représenté la seconde position 4.1 du tiroir 4 décalée angulairement de sa première position avec ses extrémités 4a, 4b en butée contre les extrémités de l'épaulement 21, au niveau des points B et D. Mais en réalité la position 4.1 est décalée uniquement en translation par rapport à la position 4 puisque c'est l'organe 11 qui tourne autour de son axe XX, et non le tiroir 4.

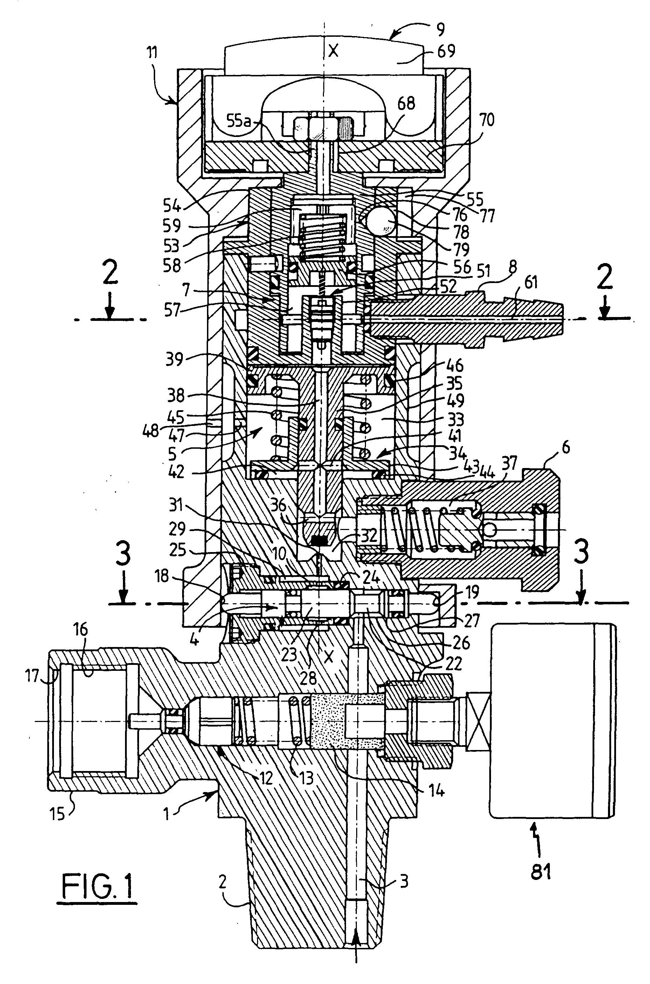

Comme on le voit sur la figure 1, le tiroir 4 comprend une partie centrale 23, portant un joint et coulissant de manière étanche dans un joint d'étanchéité 24 et dans une douille 25 montée dans un alésage étagé transversal du corps 1, et qui est suivie d'une section 22 de plus petit diamètre, située en regard du débouché de l'alésage d'entrée 3, elle-même raccordée à une collerette 27, portant un joint et de même diamètre que la partie centrale 23 et coulissant dans une portion de diamètre réduit 26 de l'alésage transversal où débouche l'alésage d'entrée 3. En regard, (en position de fermeture), de la partie centrale 23 du tiroir, la douille 25 forme une chambre intérieure 10 et est percée de trous radiaux 28 permettant le passage du gaz de la chambre 10 dans une chambre annulaire périphérique 29 et de là dans un alésage axial 31 du corps 1 débouchant dans une chambre axiale 32 qui elle-même communique avec une chambre supérieure 33 de plus grand diamètre, formées coaxialement dans la partie supérieure du corps 1. Les chambres 32 et 33 contiennent le détendeur amont 5 ainsi que la soupape d'évacuation 34 de gaz résiduel, qui sont agencés comme suit. Le détendeur 5 comprend une queue de piston cylindrique 35, dont une extrémité est engagée de manière coulissante dans la chambre inférieure 32 et présente un alésage transversal 36 débouchant dans la chambre 32, laquelle communique également avec le canal de sortie 37 du raccord 6. L'alésage 36 communique avec un canal longitudinal 38 de la queue centrale 35, débouchant à l'extrémité opposée de cette dernière, laquelle est prolongée par un piston 39 monté coulissant de manière étanche dans la chambre supérieure 33. Dans la queue centrale 35 est pratiqué un second alésage transversal 41 dont les extrémités opposées débouchent dans un espace intercalaire 42 délimité par le fond de la chambre 33 et une soupape 43 montée coaxiale sur la queue centrale 35. Un joint d'étanchéité 44 est interposé entre la face inférieure de la soupape 43 et le fond en regard de la chambre 33. La soupape 43 est sollicitée en appui sur le joint 44, contre le fond par un ressort hélicoïdal 45 coaxial à la soupape 43 et à la queue tubulaire 35 du détendeur 5. Le piston 39 coulisse de manière étanche dans la chambre 33 grâce à un joint d'étanchéité périphérique 46.

Le dispositif de soupape 34 d'évacuation de la pression résiduelle au niveau du détendeur 5 est complété par des perçages radiaux 47, 48 formés respectivement dans la paroi tubulaire 49 de la partie supérieure du corps 1 et dans la paroi de l'organe tubulaire 11.

L'ensemble de commande et de distribution comprend, en outre, en aval longitudinalement du détendeur 5 et en direction de l'extrémité supérieure de l'organe 11 opposée au tiroir 4, un second étage 7 de détente, situé au niveau de l'embout 8 basse pression, qui va maintenant être décrit.

Ce système 7 de seconde détente, ou détente aval, comporte un dispositif 51 à clapet de détente (figures 1 et 4) monté dans une saillie tubulaire axiale 52 d'un corps tubulaire 53 engagé à l'intérieur du corps 1 et sur une extrémité 54 duquel vient s'emboîter l'organe tubulaire 11. Ce corps 53 est fixe en rotation et en translation axiale, et contient une cloche 55 à l'intérieur de laquelle s'étend la saillie axiale 52. Un piston 56 est monté coulissant de manière étanche à l'intérieur de la chambre 57 de la cloche 55, un ressort hélicoïdal 58 étant disposé coaxialement à l'axe XX et exerçant une poussée axiale vers le bas sur le piston 56. Le ressort 58 prend appui sur une vis tubulaire 59 logée dans l'extrémité supérieure de la cloche 55 et qui permet le réglage de la compression du ressort 58 donc de sa poussée sur le piston 56. Ce réglage est exécuté de telle sorte que le ressort 58 exerce sur le piston 56 une poussée qui maintient le clapet 51 de seconde détente ouvert tant qu'aucun gaz ne parvient du détendeur 5.

L'extrémité inférieure de la cloche 55, opposée au ressort 58 forme une jupe tubulaire dans laquelle sont agencés, au niveau de l'alésage 61 du raccord transversal 8 de sortie basse pression, une série de trous radiaux 62...67, angulairement décalés les uns des autres, en nombre approprié et de diamètre croissant à partir du premier trou 62. Ces trous 62...67 permettent le passage du gaz ayant traversé le second clapet de détente 51 dans l'alésage 61 du raccord de sortie basse pression 8 vissé dans le corps tubulaire 53 (figure 2).

Le clapet de détente 51 comporte (figure 4) un corps tubulaire 80 formant, à son extrémité inférieure, un siège 90 sur lequel peut prendre appui de manière étanche un joint 100 fixé à une tige axiale 50 sollicitée vers le haut, en position de fermeture du clapet, par un ressort hélicoïdal 40. L'extrémité supérieure de la tige 50 porte en appui contre le piston de détente 56. Ce dernier maintient normalement sur la tige 50 une poussée légèrement supérieure à la poussée opposée du ressort 40, de sorte que le joint 100 est maintenu écarté du siège 90 et que le clapet 51 reste ouvert.

La cloche 55 comporte une extrémité supérieure centrale 55a qui traverse un disque 70 logé dans un évidement de l'extrémité supérieure de l'organe tubulaire 11 et avec lequel elle est solidarisée de manière appropriée, par exemple par des plats longitudinaux 68. Sur la face extérieure du disque 70 et le long de sa périphérie sont prévus des repères numériques (non visibles au dessin) du débit de gaz basse pression sortant par le raccord 8, un bouton manuel 69 solidaire du disque 70 et de la cloche 55 permettant de sélectionner et d'afficher la valeur de débit choisie. A chaque positionnement de l'un des trous calibrés 62...67 (figure 2) en regard de l'alésage 61 de sortie basse pression, correspond un débit déterminé de gaz.

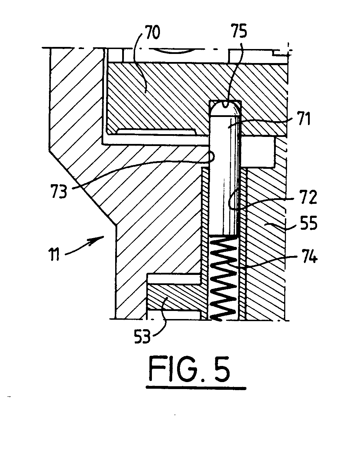

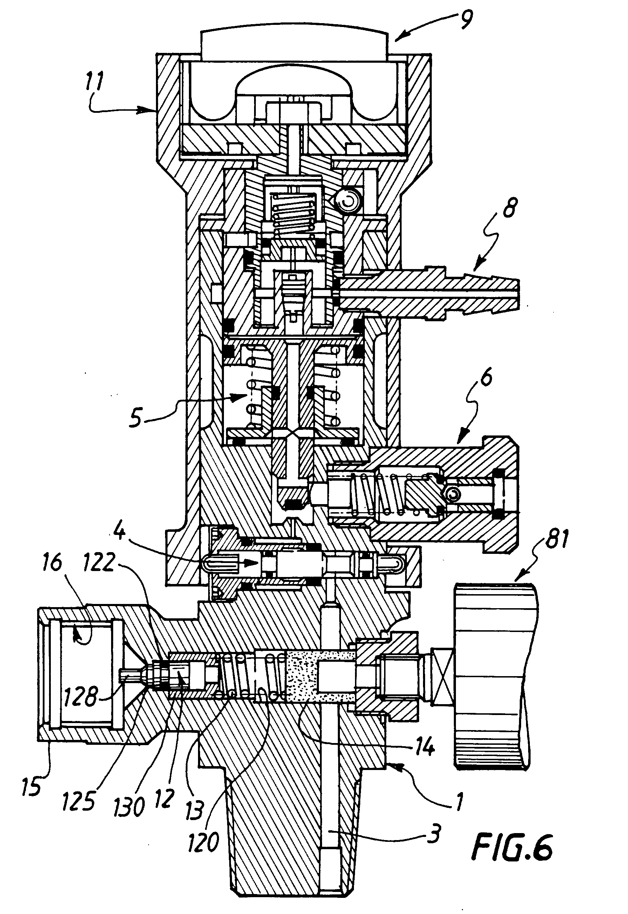

A ce dispositif de sélection et de régulation du débit de gaz basse pression, est associé un système d'indexation comprenant un doigt longitudinal 71 pouvant coulisser dans un alésage 72 du corps tubulaire 53 fixe, concentrique à la cloche 55 (figures 5 et 6) en traversant une lumière continue 73 de l'organe tubulaire 11 de commande. Le doigt 71 constitue un index sollicité élastiquement par un ressort 74 dans sa position de sortie, dans laquelle son extrémité est engagée dans l'une 75 d'une série d'empreintes ménagées sur la périphérie de la face interne du disque rotatif 70. Le doigt ou index 71 et les empreintes 75, lesquelles sont en nombre égal au nombre de trous 62...67, sont positionnés de telle sorte que le doigt 71 soit engagé dans une empreinte 75 à chaque fois qu'un trou calibré 62...67 est placé en regard de l'orifice de l'embout de sortie 61. A la figure 5, l'index 71 est ainsi engagé dans une empreinte 75. Quand on fait tourner le disque 70, l'index 71 se rétracte tant que l'on n'est pas parvenu à l'empreinte 75 suivante.

L'ensemble de commande et de distribution est également pourvu de moyens pour interdire la sélection d'un débit de gaz basse pression par l'embout 8 tant que le clapet d'isolation 4 est fermé, et inversement pour interdire la fermeture du clapet 4 tant que les moyens de sélection 9 du débit sont ouverts. Dans le mode de réalisation représenté, ces moyens comprennent une première encoche 76 agencée dans la paroi extérieure de la cloche 55, et une seconde encoche 77 formée dans la paroi intérieure de l'extrémité de l'organe de commande tubulaire 11. Ces deux encoches 76, 77 sont agencées au même niveau et en regard d'une lumière 78 formée dans le corps 53. Une bille 79 est logée dans la lumière 78 et dimensionnée de façon qu'elle soit engagée partiellement, soit dans l'encoche 76 soit dans l'encoche 77, en fonction des positions angulaires respectives de la cloche 55 et de l'organe tubulaire 11, alors que le corps 53 est fixe. En effet, les encoches 76 et 77 peuvent être décalées angulairement d'un angle approprié de manière à pouvoir, ou non, se trouver l'une en face de l'autre. De ce fait, lorsque la bille 78 est engagée dans l'encoche 76 comme représenté à la figure 1, elle interdit de faire tourner la cloche 55 au moyen du bouton 69 donc de sélectionner un débit de sortie basse pression, alors qu'au contraire il est possible de faire tourner l'organe tubulaire 11 pour commander le clapet d'isolation 4. Par ailleurs, pour une position angulaire appropriée de l'organe 11, l'encoche 77 parvient en regard de la bille 78. Il devient alors possible de faire tourner la cloche 55 par le bouton 69, de manière à chasser la bille 78 pour qu'elle s'engage partiellement dans l'encoche 77. A partir de ce moment l'organe tubulaire 11 est bloqué en rotation, donc le tiroir d'isolation 4 ne peut plus être actionné, tandis qu'au contraire les moyens de sélection 9 du débit de sortie basse pression peuvent être actionnés, puisque la bille 78 n'est plus engagée dans l'encoche 76 et ne s'oppose donc plus à la rotation de la cloche 55.

On comprend donc que cet agencement fournit une sécurité renforcée à l'utilisation de l'ensemble de commande et de distribution.

Le fonctionnement de cet ensemble est le suivant. Le gaz provenant du réservoir entre dans l'alésage 3 comme indiqué par la flèche (figure 1), tandis que le clapet 12 est évidemment en position de fermeture de l'embout 15. Le gaz parvient dans le logement annulaire 26, entre le segment central 23 et la collerette 27. Sur la figure 1, le tiroir 4 est représenté en position de fermeture, de sorte que le gaz haute pression ne peut parvenir dans le volume annulaire 10 réservé entre la partie centrale 23 et la douille 25.

Lorsqu'on fait tourner l'organe de commande 11 dans le sens approprié, compte tenu de l'orientation des rampes de guidage 18, 19, on provoque un déplacement du tiroir 4 en translation dans la direction qui l'entraîne vers la gauche sur la figure 1. Sa partie centrale 23 parvient alors dans une position (non représentée) où elle libère un passage pour le gaz du logement 26 dans la chambre annulaire 10, d'où, au travers des trous 28, il pénètre dans l'alésage 31, la chambre 32, les alésages 36, 38, 41, la chambre 42. En fonction de la force appliquée par le gaz comprimé sur la soupape 34, qui est proportionnelle à la section de celle-ci et au diamètre du joint 43, la soupape 34 peut se décoller et libérer une partie du gaz pour l'évacuer à l'extérieur par les orifices 47 et 48.

Le gaz à moyenne pression dans la chambre 32 peut être directement évacué par l'embout de sortie moyenne pression 6. Le gaz moyenne pression peut aussi franchir le détendeur 5, parvenir en regard du clapet de seconde détente 51, qu'il franchit pour remplir la chambre 57. La légère augmentation de pression dans celle-ci exerce alors sur le piston 56 une poussée qui ferme le clapet 51, et de là le gaz à basse pression (légèrement supérieure à la pression atmosphérique) est évacué par le raccord de sortie basse pression 8 à un débit réglé par le choix de l'un des trous 62...67, positionné en regard de l'alésage de sortie 61 par la rotation de la cloche 55 au moyen du bouton manuel 69. Dès que la pression a baissé dans la chambre 57, le piston 56 ouvre à nouveau le clapet 51, et ainsi de suite. L'opérateur lit sur la face extérieure du disque 70 le repère sélectionné correspondant au débit de sortie choisi.

A chaque valeur sélectionnée du débit de sortie, correspond l'indexation du doigt 71 dans l'une des encoches 75. Pendant l'opération de sélection du débit, l'organe tubulaire 11 ne peut être actionné en rotation en raison du système de sécurité constitué par la bille 78 et les encoches 76, 77, comme décrit précédemment.

Grâce au fait que les trous 62...67 (qui évidemment peuvent être en nombre variable) sont ménagés de façon à faire face à la sortie basse pression 8, ces trous peuvent être réalisés par un foret mécanique, donc de manière beaucoup moins onéreuse que les trous du brevet européen précité, qui doivent être obtenus par un moyen chimique. En effet, les trous 62...67 peuvent être réalisés avec une tolérance de l'ordre du 1/100 mm alors qu'elle était de l'ordre du micron pour les trous du dispositif antérieur, de sorte que l'on maîtrise mieux ces perçages, ainsi que les tolérances d'usinage et de débit.

Par ailleurs la pression à l'intérieur du réservoir de gaz peut s'étendre de 200x10⁵ Pa à 10x10⁵ Pa. A la sortie du premier détendeur 5, la pression gazeuse peut varier de quelques centaines de millibars, et à celle du deuxième détendeur 7, cette variation de pression peut être ramenée à quelques dizaines de millibars environ. On obtient ainsi une maîtrise totale du débit, grâce à l'agencement d'un second détendeur 7 qui permet l'obtention d'une pression de sortie pratiquement constante, quel que soit le débit prélevé. Comme déjà indiqué, la réunion en un seul dispositif du détendeur 5 et de la soupape 34 d'évacuation de la pression résiduelle de gaz contribue à simplifier notablement la réalisation de l'ensemble de distribution, et donc à diminuer son coût de fabrication.

Comme susmentionné, le remplissage d'un réservoir équipé d'un ensemble de commande et de distribution selon l'invention s'effectue par les moyens de remplissage comprenant essentiellement l'élément de clapet 12 monté mobile axialement dans un alésage étagé 120 formé transversalement dans la partie inférieure du corps 1, interceptant le passage d'entrée 3 et traversant le corps pour permettre le montage, sur son extrémité opposée au clapet 12, d'un manomètre haute pression 81.

Comme on le voit mieux sur les figures 6 à 8, l'alésage étagé 120 comprend avantageusement une partie intérieure cylindrique droite se raccordant, vers l'entrée, via un premier épaulement radial 121, avec une première partie de diamètre réduit 122, laquelle se raccorde, via un second épaulement radial 123, avec une seconde partie de diamètre réduit formant col 124, qui s'évase ensuite largement pour se raccorder au taraudage 16 de l'embout de raccordement 15 servant au montage de l'équipement de remplissage déplaçant mécaniquement l'élément de clapet 12 vers sa position d'ouverture.

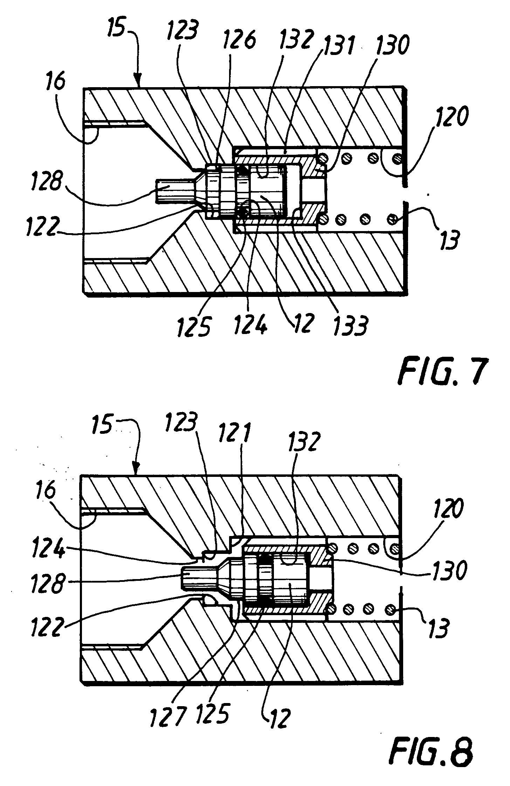

Comme on le voit mieux sur les figures 7 et 8, l'élément de clapet 12 comporte une partie de corps principale arrière de diamètre correspondant sensiblement au diamètre de la première partie de diamètre réduit 122 et dans laquelle est formée une gorge annulaire 124 recevant le joint annulaire d'étanchéité 125 coopérant normalement, en position de fermeture du clapet, avec la paroi de la portion de diamètre réduit 122 de l'alésage 120. La partie principale du corps de l'élément de clapet se prolonge vers l'avant, au delà d'un épaulement radial 126, par une partie intermédiaire de diamètre réduit 127, de diamètre correspondant sensiblement à celui du col 124, et elle-même prolongée par une queue d'extrémité avant 128 faisant saillie hors du col 124 pour coopérer avec l'équipement de remplissage lors de la mise en place de ce dernier dans l'alésage 16.

Selon un aspect de l'invention, le moyen de clapet de remplissage comporte en outre une cage métallique 130 montée à coulissement dans la partie principale de l'alésage étagé 120 et comportant, extérieurement, des passages axiaux 131. La cage 130 comporte une chambre intérieure ouverte vers l'avant et latéralement délimitée par un alésage 132 ayant le même diamètre que la première portion de diamètre réduit 122, et partiellement, vers l'arrière, par un épaulement radial 133. La cage 130 est sollicitée axialement en butée par son extrémité avant contre l'épaulement 121, par le ressort 13 disposé dans l'alésage étagé 120 et prenant appui sur un filtre 14 disposé à l'intersection de l'alésage 120 et du passage 3 et s'étendant en travers de ce dernier.

Le fonctionnement du clapet de remplissage selon l'invention est le suivant :

Dans la position de fermeture représentée sur la figure 1, l'élément de clapet 12 est plaqué, par la pression résiduelle dans le réservoir, avec son épaulement avant 126 en butée contre l'épaulement 123 de l'alésage étagé et avec le joint 125 coopérant en étanchéité avec la paroi de la première portion de diamètre réduit 122 de l'alésage étagé. La cage 130 est plaquée, par le ressort 13, contre l'épaulement 121, avec l'épaulement central 133 à distance de la face arrière de l'élément de clapet 12.

Lors de la mise en place, dans le taraudage 16, de l'équipement de remplissage, ce dernier, venant porter contre la queue 128, repousse l'élément de clapet 12 vers l'arrière de l'alésage étagé (vers la droite sur les figures 1 à 3).

Dans un premier temps, représenté sur la figure 2, l'élément de clapet 12 est reculé d'une distance telle que le joint 125 quitte la portion de diamètre réduit 122 de l'alésage étagé pour être reçu dans l'alésage 132 de la cage 130, la face arrière de l'élément de clapet 12 étant toujours écartée de l'épaulement 133.

Par la suite, l'élément de clapet 12 continuant à être repoussé vers l'intérieur, la face d'extrémité arrière de l'élément de clapet 12 vient porter contre l'épaulement interne 133 de la cage 130, tout complément de déplacement de l'élément de clapet 12 s'effectuant dès lors en entraînant la cage 130 à l'encontre du ressort 13, en libérant complètement le passage de gaz de l'extérieur vers l'intérieur de l'alésage étagé puis, via le filtre 14, et le passage d'entrée 3, dans le réservoir.

On comprendra que, dès la configuration de la figure 2, le joint 125 vient se loger dans la cage 130, le joint demeurant à l'abri de cette dernière dès la pleine ouverture de l'accès à l'alésage étagé et pendant toute la séquence de remplissage, la cage 130 assurant ainsi, comme susmentionné, un rôle d'écran protecteur à la fois mécanique et thermique.

## Revendications

1. Ensemble de commande et de distribution de gaz, adapté pour être raccordé à un réservoir contenant du gaz sous haute pression, ayant un axe longitudinal (X-X), comportant un corps (1) dans lequel est ménagé un passage (3) d'entrée du gaz du réservoir, et contenant un clapet d'isolation (4) exposé au gaz sous haute pression, au moins un détendeur de pression (5), des moyens (9) de sélection et de régulation du débit par au moins une sortie (6;8) de gaz à pression réduite, et un organe tubulaire (11) de commande du clapet d'isolation coiffant le corps, coaxialement à ce dernier, caractérisé en ce que le clapet d'isolation est constitué par un tiroir (4) déplaçable transversalement dans un logement (26) du corps et dont les extrémités opposées (4a, 4b), faisant saillie hors du corps, coopèrent directement avec des rampes courbes (18, 19) de guidage formées par l'organe tubulaire de commande et profilées de manière qu'une rotation de l'organe tubulaire entraîne un déplacement en translation du tiroir transversalement à l'axe (X-X), dans un sens ou dans le sens opposé suivant le sens de rotation de l'organe tubulaire.

2. Ensemble selon la revendication 1, caractérisé en ce qu'il comprend des moyens (76, 77, 78) pour interdire la sélection d'un débit de gaz basse pression, tant que le clapet d'isolation (4) est fermé, et inversement pour interdire la fermeture du clapet d'isolation tant que les moyens (9) de sélection du débit sont ouverts.

3. Ensemble selon la revendication 2, caractérisé en ce que lesdits moyens comprennent une première encoche (76) agencée dans la paroi extérieure d'une cloche (55) solidaire en rotation d'un organe rotatif (70) de commande de sélection du débit, cette cloche étant disposée intérieurement à un corps tubulaire fixe (53) engagé coaxialement audit corps (1), une seconde encoche (77) formée dans la paroi intérieure de l'extrémité de l'organe (11) de commande tubulaire, et une lumière (78) dans la cloche en regard des encoches et contenant une bille (79) susceptible de coopérer avec les encoches (76,77).

4. Ensemble selon l'une des revendications 1 à 3, caractérisé en ce qu'il comprend une soupape d'évacuation (34) sollicitée élastiquement (45), montée dans le corps (1) coaxialement au détendeur (5), la soupape (34) et le détendeur (5) étant logés dans un évidement (32, 33) du corps (1) communiquant avec l'extérieur par des ouvertures (47, 48), respectivement dans le corps et dans l'organe tubulaire (11) de commande du clapet d'isolation (4).

5. Ensemble selon les revendications 1 à 4, caractérisé en ce que les moyens (9) de sélection et de régulation du débit comprennent des moyens de seconde détente (51, 56, 58) délivrant du gaz à basse pression à une sortie de gaz basse pression (8).

6. Ensemble selon la revendication 5, caractérisé en ce que lesdits moyens de seconde détente comportent un dispositif à clapet de détente (51) placé en aval du détendeur (5), associé à un ressort (40) de rappel de la tige (50) du clapet en position de fermeture, elle-même en appui sur un piston (56) de régulation de basse pression monté coulissant dans une cloche (55) coaxiale au corps, solidaire en rotation d'un bouton (69) de sélection manuelle du débit de sortie et percée de trous calibrés (62...67) pouvant être positionnés angulairement en regard de la sortie basse pression (8).

7. Ensemble selon la revendication 6, caractérisé en ce qu'un corps tubulaire (53) fixe, concentrique à la cloche (55) est pourvu d'un doigt longitudinal (71) élastiquement rétractable et sollicité dans une position où son extrémité est engagée dans l'une (75) d'une série d'empreintes (75) ménagées sur la périphérie de la face interne d'un disque rotatif (70) portant des repères indicatifs du débit de sortie et qui est solidaire en rotation, ainsi que la cloche, du bouton (69) de sélection du débit de sortie, le doigt et les empreintes étant positionnés de telle sorte que le doigt soit engagé dans une empreinte chaque fois qu'un trou calibré est placé en regard de l'alésage (61) de l'embout de sortie (8).

8. Ensemble selon l'une des revendications 1 à 7, caractérisé en ce qu'il comporte des moyens de remplissage du réservoir, comprenant un élément de clapet (12) monté dans le corps (1) entre le réservoir et le tiroir (4), et un embout latéral (15) d'entrée, dans lequel est formé un taraudage (16) pour le vissage d'un raccord, et en ce que cet embout présente une collerette d'entrée (17) dont le diamètre est inférieur à celui du taraudage (16).

9. Ensemble selon la revendication 8, caractérisé en ce que les moyens de remplissage comprennent un alésage étagé (120) communiquant avec le passage d'entrée (3) et dans lequel coulisse axialement l'élément de clapet (12) qui comporte un joint annulaire (125) coopérant, en position de fermeture, avec une portion de diamètre réduit (122) de l'alésage étagé, et déplaçable mécaniquement de l'extérieur, à l'encontre d'un organe élastique (13), vers une position d'ouverture, et une cage (130) mobile axialement dans l'alésage étagé (120) et définissant une chambre cylindrique de même diamètre intérieur (132) que ladite portion de diamètre réduit (122) de l'alésage étagé et dans laquelle s'étend une partie de l'élément de clapet portant le joint (125) pour recevoir ce dernier lors d'un déplacement de l'élément de clapet (12) depuis sa position de fermeture.

10. Ensemble selon la revendication 9, caractérisé en ce que la cage (130) comporte un épaulement interne (133) susceptible de coopérer en appui avec la face arrière de l'élément de clapet (12) lors du déplacement mécanique de ce dernier.

11. Ensemble selon la revendication 9 ou la revendication 10, caractérisé en ce que l'organe élastique (13) porte en appui axial sur la cage (130).

12. Ensemble selon la revendication 11, caractérisé en ce que l'organe élastique (13) porte en appui axial contre un filtre (14) disposé dans l'alésage étagé (120).

13. Ensemble selon la revendication 12, caractérisé en ce que le filtre (14) s'étend en travers du passage d'entrée (3).

14. Ensemble selon la revendication 13, caractérisé en ce qu'il comporte un manomètre (81) monté dans ledit alésage étagé (120).

## Patentansprüche

1. Gassteuer- und -verteilanordnung zur Verbindung mit einem unter hohem Druck stehendes Gas enthaltenden Behälter, die eine Längsachse (X-X) aufweist, mit einem Körper (1), in dem ein Durchgang (3) zum Einlaß des Gases vom Behälter ausgebildet ist und der ein dem unter hohem Druck stehendem Gas ausgesetztes Absperrventil (4), mindestens einen Druckminderer (5), Mittel (9) zur Wahl und Regulierung des Durchflusses mittels eines Ausgangs (6; 8) für Gas mit vermindertem Druck und ein den Körper koaxial zu diesem bedeckendes, röhrenförmiges Glied (11) zur Steuerung des Absperrventils enthält, dadurch gekennzeichnet, daß das Absperrventil aus einem in Querrichtung in einer Aufnahme (26) des Körpers beweglichen Schieber (4) besteht, dessen einander gegenüberliegende, aus dem Körper vorragende Enden (4a, 4b) direkt mit den durch das röhrenförmige Steuerglied gebildeten und profilierten gekrümmten Führungsrampen (18, 19) so zusammenwirken, daß eine Drehung des röhrenförmigen Glieds eine Translationsbewegung des Schiebers quer zur Achse (X-X) in einer Richtung oder in entgegengesetzter Richtung gemäß der Drehrichtung des röhrenförmigen Glieds bewirkt.

2. Anordnung nach Anspruch 1, dadurch gekennzeichnet, daß sie Mittel (76, 77, 78) zum Verhindern der Wahl eines Niederdruckgasdurchflusses, solange das Absperrventil (4) geschlossen ist, und umgekehrt zum Verhindern des Schließens des Absperrventils, solange die Durchflußwahlmittel (9) geöffnet sind, enthält.

3. Anordnung nach Anspruch 2, dadurch gekennzeichnet, daß die Mittel eine in der Außenwand einer drehfest mit einem Drehglied (70) zur Steuerung der Durchflußwahl verbundenen Glocke (55) ausgebildete erste Kerbe (76) umfassen, wobei diese Glocke innerhalb eines festgelegten röhrenförmigen Körpers (53) angeordnet ist, der koaxial mit dem Körper (1) in Eingriff steht, eine in der Innenwand des Endes des röhrenförmigen Steuerglieds (11) ausgebildete zweite Kerbe (77) und einen in der Glocke gegenüber den Kerben ausgebildeten Schlitz (78), der eine Kugel (79), die mit den Kerben (76, 77) zusammenwirken kann, enthält.

4. Anordnung nach einem der Ansprüche 1 bis 3, dadurch gekennzeichnet, daß sie ein elastisch (45) vorbelastetes Entlüftungsventil (34) enthält, das koaxial mit dem Druckminderer (5) in dem Körper (1) angebracht ist, wobei das Ventil (34) und der Druckminderer (5) in einer Aussparung (32, 33) des Körpers (1) untergebracht sind, die durch Öffnungen (47, 48) im Körper bzw. im röhrenförmigen Glied (11) zur Steuerung des Absperrventils (4) mit der Umgebung in Verbindung steht.

5. Anordnung nach den Ansprüchen 1 bis 4, dadurch gekennzeichnet, daß die Durchflußwahl- und -reguliermittel (9) Mittel (51, 56, 58) zur zweiten Druckminderung umfassen, die das Niederdruckgas einem Niederdruckgasausgang (8) zuführen.

6. Anordnung nach Anspruch 5, dadurch gekennzeichnet, daß die Mittel zur zweiten Druckminderung eine hinter dem Druckminderer (5) positionierte Vorrichtung mit einem Druckminderventil (51) umfassen, die einer Feder (40) zum Zurückholen der Ventilstange (50) in Schließstellung zugeordnet ist, wobei die Ventilstange an einem Niederdruckregulierkolben (56) anliegt, der in einer mit dem Körper koaxialen Glocke (55) gleitend angebracht ist, die mit einem Schalter (69) zur manuellen Wahl des Ausgangsdurchflusses drehfest verbunden und mit kalibrierten Löchern (62...67) ausgebildet ist, die winkelförmig gegenüber dem Niederdruckausgang (8) positioniert werden können.

7. Anordnung nach Anspruch 6, dadurch gekennzeichnet, daß ein zur Glocke (55) konzentrischer röhrenförmiger Körper (53) mit einem elastisch zurückziehbaren Längsfinger (71) versehen ist, der in eine Stellung vorbelastet ist, in der sein Ende in einer (75) von einer Reihe von Vertiefungen (75) in Eingriff steht, welche im Umfang der Innenfläche einer Drehscheibe (70) ausgebildet sind, die mit den Ausgangsdurchfluß anzeigenden Markierungen versehen und so wie die Glocke drehfest mit dem Ausgangsdurchflußwahlschalter (69) verbunden ist, wobei der Finger und die Vertiefungen so angeordnet sind, daß der Finger jedesmal dann mit einer Vertiefung in Eingriff gebracht wird, wenn ein kalibriertes Loch gegenüber der Bohrung (61) des Ausgangsstutzens (8) positioniert ist.

8. Anordnung nach einem der Ansprüche 1 bis 7, dadurch gekennzeichnet, daß sie Mittel zum Füllen des Behälters, die ein Ventilelement (12) enthalten, das zwischen dem Behälter und dem Schieber (4) in dem Körper (1) angebracht ist, und einen Seiteneingangsstutzen (15) enthält, in dem ein Innengewinde (16) zum Einschrauben eines Verbinders ausgebildet ist, und daß dieser Stutzen einen Eingangsflansch (17) aufweist, dessen Durchmesser kleiner ist als der des Innengewindes (16).

9. Anordnung nach Anspruch 8, dadurch gekennzeichnet, daß die Füllmittel eine abgestufte Bohrung (120), die mit dem Eingangsdurchgang (3) in Verbindung steht und in der das Ventilelement (12) axial gleitet, wobei letzteres eine ringförmige Dichtung (125) aufweist, die in Schließstellung mit einem Teil (122) der gestuften Bohrung verminderten Durchmessers zusammenwirkt, und von außen gegen ein elastisches Glied (13) in eine Öffnungsstellung mechanisch verschoben werden kann, und einen in der abgestuften Bohrung (120) axial beweglichen Käfig (130) enthält, der eine zylindrische Kammer mit gleichem Innendurchmesser (132) wie der einen verminderten Durchmesser aufweisende Teil (122) der abgestuften Bohrung definiert, wobei sich ein Teil des die Dichtung (125) aufweisenden Ventilelements zur Aufnahme der Dichtung bei einer Bewegung des Ventilelements (12) aus seiner Schließstellung in der Kammer erstreckt.

10. Anordnung nach Anspruch 9, dadurch gekennzeichnet, daß der Käfig (130) eine Innenschulter (133) aufweist, die in Anlage mit der hinteren Fläche des Ventilelements (12) zusammenwirken kann, wenn letzteres mechanisch bewegt wird.

11. Anordnung nach Anspruch 9 oder 10, dadurch gekennzeichnet, daß das elastische Glied (13) axial an dem Käfig (130) anliegt.

12. Anordnung nach Anspruch 11, dadurch gekennzeichnet, daß das elastische Glied (13) axial an einem in der abgestuften Bohrung (120) angeordneten Filter (14) anliegt.

13. Anordnung nach Anspruch 12, dadurch gekennzeichnet, daß sich das Filter (13) quer durch den Eingangsdurchgang (3) erstreckt.

14. Anordnung nach Anspruch 13, dadurch gekennzeichnet, daß sie ein Manometer (81) aufweist, das in der abgestuften Bohrung (120) angebracht ist.

## Claims

1. Gas control and dispensing assembly designed to be connected to a cylinder containing gas under high pressure, having a longitudinal axis (X-X), comprising a body (1) in which there is formed a passage (3) for inlet of the gas from the cylinder and containing an isolation valve (4) exposed to the gas under high pressure, at least one pressure reducer (5), means (9) for selecting and regulating the flow rate through at least one outlet (6; 8) for gas at reduced pressure, and a tubular member (11) for controlling the isolation valve capping the body, coaxially with the latter, characterized in that the isolation valve consists of a spool (4) which can be moved transversely in a housing (26) of the body and of which the opposite ends (4a, 4b), projecting from the body, collaborate directly with curved guide ramps (18, 19) formed by the tubular control member and shaped so that rotation of the tubular member gives rise to a translational movement of the spool transversely to the axis (X-X) in one direction or in the opposite direction depending on the direction of rotation of the tubular member.

2. Assembly according to Claim 1, characterized in that it comprises means (76, 77, 78) for preventing a low-pressure gas flow rate from being selected as long as the isolating valve (4) is closed, and conversely for preventing the isolation valve from being closed as long as the flow rate selection means (9) are open.

3. Assembly according to Claim 2, characterized in that the said means comprise a first notch (76) arranged in the outer wall of a bell cover (55) which rotates as one with a rotary member (70) for controlling the flow rate selection, this bell cover being arranged inside a fixed tubular body (53) engaged coaxially with the said body (1), a second notch (77) formed in the interior wall of the end of the tubular control member (11), and a slot (78) in the bell cover facing the notches and containing a ball (79) capable of collaborating with the notches (76, 77).

4. Assembly according to one of Claims 1 to 3, characterized in that it comprises a discharge valve (34) which is elastically urged (45) and mounted in the body (1) coaxially with the reducer (5), the valve (34) and the reducer (5) being housed in a recess (32, 33) of the body (1) communicating with the outside via openings (47, 48) made, respectively, in the body and in the tubular control member (11) of the isolation valve (4).

5. Assembly according to Claims 1 to 4, characterized in that the means (9) of selecting and setting the flow rate comprise second-reduction means (51, 56, 58) delivering a gas at low pressure to a low-pressure gas outlet (8).

6. Assembly according to Claim 5, characterized in that the said second-reduction means comprise a pressure-reducing valve device (51) placed downstream of the reducer (5), associated with a spring (40) for returning the stem (50) of the valve to the closed position, the stem itself resting on a low-pressure regulating piston (56) mounted to slide in a bell cover (55) coaxial with the body, rotating as one with a knob (69) for manually selecting the outlet flow rate and pierced with calibrated holes (62...67) which can be positioned angularly facing the low-pressure outlet (8).

7. Assembly according to Claim 6, characterized in that a fixed tubular body (53), concentric with the bell cover (55), is provided with a longitudinal finger (71) which is elastically retractable and urged into a position in which its end is engaged in one (75) of a series of indentations (75) formed on the periphery of the internal face of a rotary disc (70) carrying markings indicative of the outlet flow rate and which rotates as one, as does the bell cover, with the outlet flow rate selection knob (69), the finger and the indentations being positioned in such a way that the finger is engaged in an indentation each time a calibrated hole is placed facing the bore (61) of the outlet adapter (8).

8. Assembly according to one of Claims 1 to 7, characterized in that it comprises means for filling the cylinder, comprising a valve element (12) mounted in the body (1) between the cylinder and the spool (4), and a lateral inlet adapter (15) in which there is a tapping (16) to screw in a connector, and in that this adapter has an inlet flange (17), the diameter of which is smaller than that of the tapping (16).

9. Assembly according to Claim 8, characterized in that the filling means comprise a stepped bore (120) communicating with the inlet passage (3) and in which there slides axially the valve element (12) which has an annular seal (125) which, in the closed position, collaborates with a reduced-diameter portion (122) of the stepped bore and which can be moved mechanically from the outside, against an elastic member (13), into an open position, and a cage (130) that can be moved axially in the stepped bore (120) and defines a cylindrical chamber of the same inside diameter (132) as the said reduced-diameter portion (122) of the stepped bore and into which part of the valve element carrying the seal (125) extends to receive this seal when the valve element (12) is moved from its closed position.

10. Assembly according to Claim 9, characterized in that the cage (130) comprises an internal shoulder (133) capable of collaborating, by bearing against it, with the rear face of the valve element (12) when the latter is mechanically moved.

11. Assembly according to Claim 9 or Claim 10, characterized in that the elastic member (13) bears axially on the cage (13).

12. Assembly according to Claim 11, characterized in that the elastic member (13) bears axially against a filter (14) arranged in the stepped bore (120).

13. Assembly according to Claim 12, characterized in that the filter (14) extends across the inlet passage (3).

14. Assembly according to Claim 13, characterized in that it comprises a pressure gauge (81) mounted in the said stepped bore (120).
